# FASCICULE DE BREVET EUROPEEN

(11) **EP 0 445 482 B1**
(45) Date de publication et mention de la délivrance du brevet: **08.06.1994**
(21) Numéro de dépôt: 90440126.2
(22) Date de dépôt: 28.12.1990
(51) Int. Cl.: B29C 67/22, B32B 31/12

(54) **Procédé de fabrication d'un appui-tête avec insert articulé et dispositif pour la mise en oeuvre de ce procédé**
Vorrichtung und Verfahren zum Herstellen einer Kopfstütze mit gelenkartigem Einsatz
Method and apparatus for the production of a headrest with an articulated insert

(30) Priorité: 16.02.1990 FR 9002080
(43) Date de publication de la demande: 11.09.1991
(73) Titulaire: ROTH FRERES S.A., 67100 Strasbourg (FR)
(72) Inventeur: Quirin, Paul, F-67400 Illkirch-Graffenstaden (FR)
(74) Mandataire: Nuss, Pierre

(56) Documents cités:
- CH-A- 530 252
- DE-B- 1 270 788
- JAPANESE PATENT REPORTS, Section Ch classe A32, résumé no. 79-21177B Derwent Publications Ltd, Londres, GB; & JP-B-54003189 (Mitsuboshi Belting KK) 19-02197

## Description

La présente invention concerne le domaine de la fabrication d'accessoires pour automobiles, et a pour objet un procédé de fabrication d'un appui-tête avec insert articulé ainsi qu'un dispositif pour la mise en oeuvre de ce procédé.

Actuellement, la fabrication d'un appui-tête par coulée in situ d'un mélange de polyuréthane consiste, tout d'abord, à confectionner par couture ou soudure une housse, constituant l'enveloppe extérieure de l'appui-tête, en tissu, en PVC ou en cuir, à placer cette housse dans un moule conformateur, à couler à l'intérieur de cette housse un mélange moussant de polyuréthane qui, après expansion, remplit entièrement ladite housse, et, enfin, à démouler, après polymérisation dudit mélange moussant, l'appui-tête garni ainsi obtenu.

Néanmoins, avant de couler le mélange moussant, il est indispensable de disposer à l'intérieur de la housse, un insert métallique constitué, généralement, par une tige métallique en forme de fer à cheval emprisonnée dans la mousse de polyuréthane, mais dont les extrémités des branches émergent à la base de l'appui-tête. Ces deux extrémités s'emboîtent en coulissant dans le haut du dossier du siège. On obtient, par conséquent, un appui-tête réglable en hauteur par coulissement, mais non inclinable d'avant en arrière par rapport au dossier.

Par le document JP-B-54 003 189, on connaît un procédé de fabrication d'un tel appui-tête muni d'un insert, ledit procédé consistant à couler une mousse expansible dans une enveloppe extérieure dans laquelle est disposé l'élément support d'un insert dont les branches émergent de ladite enveloppe extérieure.

L'injection de la mousse expansible est réalisée dans ce document à travers une ouverture dans l'enveloppe, obturable par un volet rabattable découpé dans l'enveloppe, ce alors que l'insert est déjà disposé partiellement par son élément support dans l'enveloppe.

Afin d'obtenir un appui-tête inclinable, il est nécessaire de munir chacune des deux branches de l'insert d'une articulation. Ces deux articulations sont situées généralement pour des raisons d'esthétique et d'efficacité, entièrement à l'intérieur de l'appui-tête, mais à proximité immédiate du point d'émergence des deux branches de l'insert hors de l'appui-tête.

Or, pour permettre le débattement des branches articulées dans l'appui-tête au niveau des articulations, il était obligatoirement nécessaire, d'une part, de réaliser des fentes adéquates dans l'enveloppe extérieure de l'appui-tête et, d'autre part, d'empêcher toute pénétration de mousse de polyuréthane dans l'espace de débattement desdites branches articulées.

A cet effet, il est actuellement indispensable de disposer autour de ces articulations des carters de protection, habituellement en matière plastique injectée, d'une part, pour empêcher, lors de la coulée in situ de la mousse de polyuréthane et, plus particulièrement, en fin d'expansion dudit mélange moussant, toute fuite de mousse au niveau des fentes pratiquées préalablement dans l'enveloppe extérieure et, d'autre part, pour délimiter, pendant la coulée in situ et durant la phase d'expansion du mélange moussant, les futurs espaces de débattement desdites branches articulées.

L'inconvénient majeur que présentent ces carters de protection est leur prix de revient élevé, se répercutant, bien entendu, sur le prix de revient total de l'appui-tête.

Le problème posé par la présente invention consiste, par conséquent, à réaliser un appui-tête avec insert articulé, par coulée in situ, sans prévoir au préalable ni fentes de débattement dans l'enveloppe extérieure, ni espaces de débattement dans la mousse, et, également, sans utilisation de carter de protection, simplifiant par là même la fabrication desdits appui-têtes.

Ce problème est précisément résolu grâce au procédé de fabrication d'un appui-tête avec insert articulé conforme à l'invention, consistant préalablement à couler in situ un mélange de mousse de polyuréthane dans une enveloppe extérieure dans laquelle a été disposé un insert comprenant des branches articulées, procédé caractérisé en ce qu'il consiste à creuser, au moyen d'éléments chauffants, les espaces de débattement des branches articulées de l'insert par fusion à chaud de l'enveloppe extérieure et de la mousse de polyuréthane aux emplacements correspondants de l'appui-tête, et à cautériser, simultanément, l'enveloppe extérieure et la mousse de polyuréthane au niveau desdits espaces de débattement.

L'invention a également pour objet un dispositif pour la fabrication d'un appui-tête avec un insert articulé obtenu par coulée in situ d'un mélange de mousse de polyuréthane dans une enveloppe extérieure contenant l'insert comprenant des branches articulées, pour la mise en oeuvre du procédé de fabrication décrit ci-dessus, dispositif caractérisé en ce qu'il est principalement constitué par une structure mobile suivant au moins une direction donnée, notamment parallèlement aux branches de l'insert de l'appui-tête disposé sur un support de maintien rapporté et comportant deux bras articulés munis chacun à l'une de leurs extrémités, d'éléments chauffants reliés à une source électrique.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un appui-tête ainsi que d'une partie du dispositif pour la mise en oeuvre du procédé conforme à l'invention durant la phase d'aménagement des espaces de débattement dans un appui-tête ;
la figure 2 est une vue de détail en élévation latérale d'une lame chauffante faisant partie du dispositif représenté à la figure 1 ;
la figure 3 est une vue en élévation frontale de la lame chauffante représentée à la figure 2 ;
la figure 4 est une vue en perspective d'un appui-tête obtenu par le procédé de fabrication conforme à l'invention, et,
la figure 5 est une vue en perspective d'un appui-tête de l'art antérieur muni de carters de protection.

Conformément à l'invention, le procédé de fabrication d'un appui-tête avec insert articulé consiste à réaliser, préalablement, un appui-tête 1 muni d'un insert 5 articulé, selon le procédé de fabrication d'un appui-tête muni d'un insert non articulé, notamment par coulée in situ d'un mélange de mousse de polyuréthane 7, puis à creuser, au moyen d'éléments chauffants, les espaces de débattement 3 des branches articulées 4 de l'insert 5 par fusion à chaud de l'enveloppe extérieure 6 et de la mousse de polyuréthane 7 aux emplacements correspondants 8 de l'appui-tête 1, et à cautériser, simultanément, l'enveloppe extérieure 6 et la mousse de polyuréthane 7 au niveau desdits espaces de débattement 3.

L'aménagement des espaces de débattement 3 est donc postérieure à la phase de fabrication de l'appui-tête 1 par coulée in situ d'un mélange de mousse de polyuréthane 7. Ainsi, il n'est pas nécessaire, lors de ladite coulée in situ et lors de la phase d'expansion consécutive de la mousse 7, de délimiter, autour des articulations des branches 4 de l'insert 5, des espaces de débattement 3, par la mise en place antérieure par exemple de carters de protection 10.

En outre, la cautérisation de l'enveloppe extérieure 6, réalisée, par exemple, en tissu, PVC ou cuir, et de la mousse 7 au niveau des surfaces délimitant les espaces de débattement 3, permet à celles-ci de subir sans effritement les déformations et les frottements intervenant lors des débattements des branches 4 de l'insert 5.

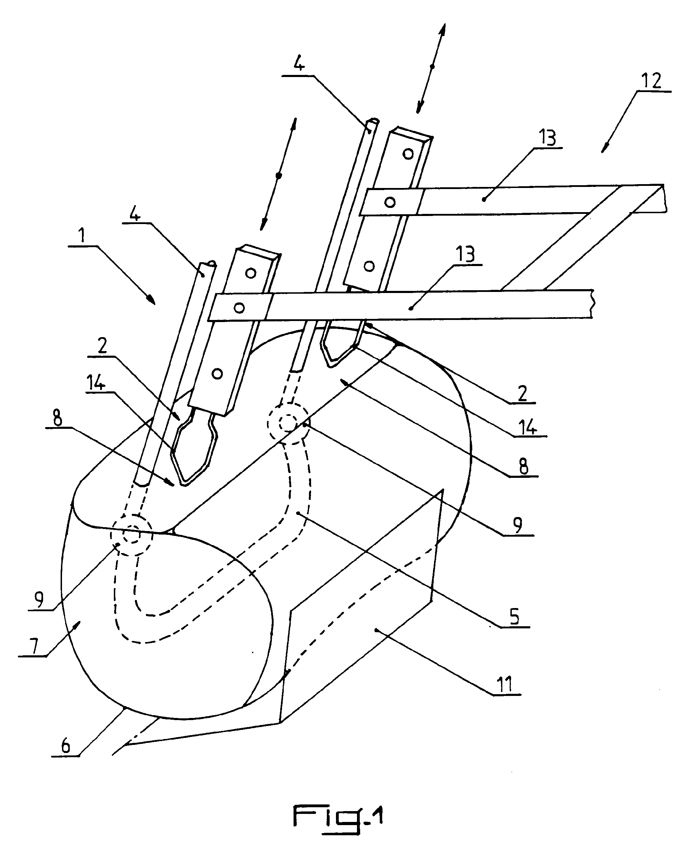

Selon une première caractéristique de l'invention, représentée partiellement à la figure 1 des dessins annexés, l'aménagement des espaces de débattement 3 consiste, tout d'abord, à disposer l'appui-tête 1 sur un support 11 de maintien, de manière à ce que les emplacements 8 à creuser soient apparents, puis à porter les éléments chauffants 2 à une température permettant la réalisation d'une fusion à chaud, à faire pénétrer lesdits éléments chauffants 2 dans l'appui-tête 1 au niveau desdits emplacements 8 à creuser jusqu'à une profondeur fonction de l'insert articulé 5 implanté et, enfin, à retirer les éléments chauffants 2 sitôt que la profondeur prédéterminée est atteinte, et à dégager l'appui-tête 1 ainsi réalisé du support 11 de maintien.

L'ensemble de ces opérations peut être effectué, par exemple, sur un poste de travail spécifique.

Conformément à une autre caractéristique de l'invention, la vitesse de pénétration des éléments chauffants 2, lors du creusement des espaces de débattement 3 par fusion à chaud, est de l'ordre de 1 centimètre par seconde et la vitesse de rétraction desdits éléments 2 de l'ordre de 10 centimètres par seconde, les éléments chauffants 2 étant portés à une température d'environ 280 degrés Celsius pour la fusion à chaud.

L'invention a également pour objet un dispositif pour la mise en oeuvre du procédé de fabrication d'un appui-tête 1 avec insert articulé, représenté à la figure 1 des dessins annexés, dispositif principalement constitué par une structure 12 mobile suivant au moins une direction donnée, notamment parallèlement aux branches 4 d'un insert 5 d'un appui-tête 1 disposé sur un support de maintien 11 rapporté, et comportant deux bras articulés 13 munis chacun, à l'une de leurs extrémités, d'éléments chauffants 2 reliés à une source électrique.

Le déplacement de la structure 12 mobile est réalisé selon un axe parallèle aux branches 4 de 1'insert 5 et grâce à un moyen mécanique tel que, par exemple, une vis sans fin, ou grâce à un moyen hydraulique ou pneumatique tel que, par exemple, un dispositif à vérins ou autres.

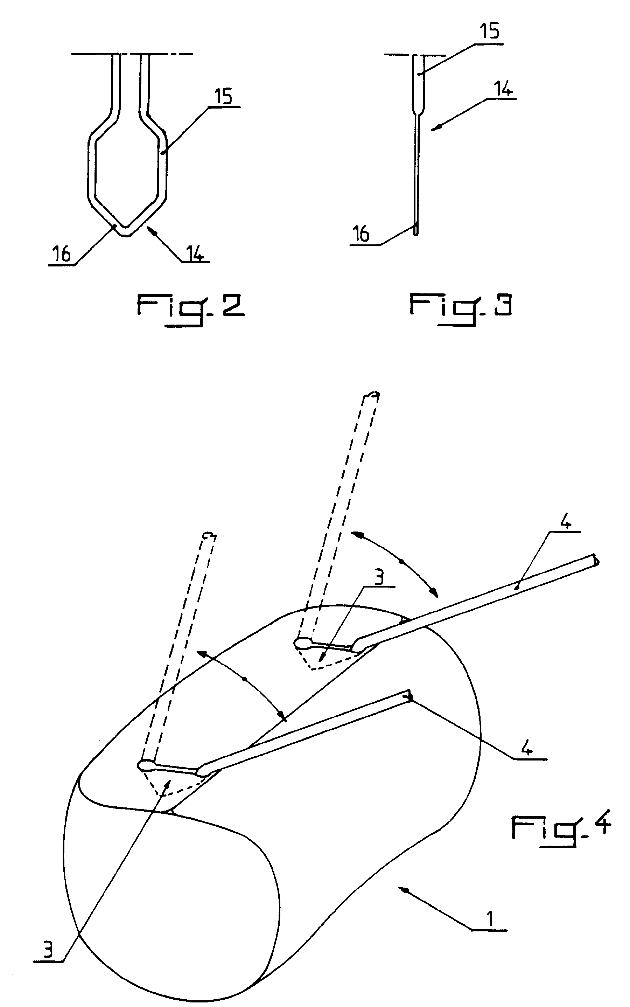

Comme le montre la figure 2 des dessins annexés, les éléments chauffants 2 se présentent avantageusement sous la forme de boucles rigides 14, réalisées par cintrages successifs d'éléments de fil chauffant 15 et comportant des parties 16 formées en V utilisées comme lames chauffantes.

La forme particulière de ces lames chauffantes 5 permet de creuser les espaces de débattement 3 par simple translation desdits éléments chauffants 2 le long des branches 4 de l'insert 5 articulé.

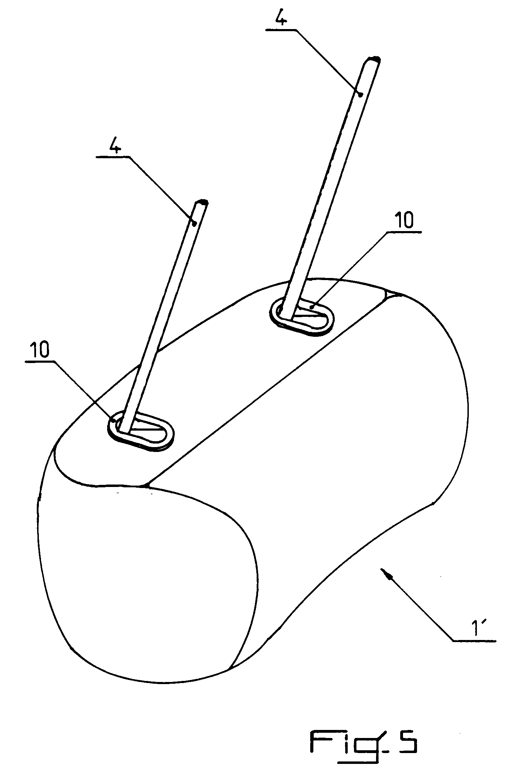

Selon une caractéristique supplémentaire de l'invention, représentée à la figure 3 des dessins annexés, le fil chauffant 15 constituant les boucles 14 consiste en un fil d'acier de section circulaire et d'un diamètre de l'ordre de 2 millimètres, les lames chauffantes 16 en V présentant une section rectangulaire d'une épaisseur de 0,5 millimètre environ et d'une hauteur de 2 millimètres environ.

Ce dimensionnement des lames chauffantes 16, obtenu par martelage et usinage consécutif d'une partie correspondante du fil d'acier 15, facilite la pénétration de ces dernières dans le corps de l'appui-tête 1, lors du creusement des espaces de débattement 3.

Par conséquent, le procédé de fabrication conforme à l'invention permet de réaliser un appui-tête 1 avec insert articulé, par coulée in situ d'un mélange de mousse de polyuréthane 7, sans avoir recours à l'utilisation de carters de protection 10.

Les figures 4 et 5 des dessins annexés représentent respectivement, d'une part, un appui-tête 1 avec insert 5 articulé réalisé selon le procédé de fabrication conforme à l'invention, et, d'autre part, un appui-tête 1′ avec insert articulé selon l'art antérieur et muni de carters de protection 10.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de fabrication d'un appui-tête avec insert articulé, consistant préalablement à couler in situ un mélange de mousse de polyuréthane dans une enveloppe extérieure dans laquelle a été disposé un insert comprenant des branches articulées, procédé caractérisé en ce qu'il consiste à creuser, au moyen d'éléments chauffants (2), les espaces de débattement (3) des branches articulées (4) de l'insert (5) par fusion à chaud de l'enveloppe extérieure (6) et de la mousse de polyuréthane (7) aux emplacements correspondants (8) de l'appui-tête (1), et à cautériser, simultanément, l'enveloppe extérieure (6) et la mousse de polyuréthane (7) au niveau desdits espaces de débattement (3).

2. Procédé de fabrication selon la revendication 1, caractérisé en ce que l'aménagement des espaces de débattement (3) consiste, tout d'abord, à disposer l'appui-tête (1) sur un support (11) de maintien, de manière à ce que les emplacements (8) à creuser soient apparents, puis à porter les éléments chauffants (2) à une température permettant la réalisation d'une fusion à chaud, à faire pénétrer lesdits éléments chauffants (2) dans l'appui-tête (1) au niveau desdits emplacements (8) à creuser jusqu'à une profondeur fonction de l'insert articulé (5) implanté et, enfin, à retirer les éléments chauffants (2) sitôt que la profondeur prédéterminée est atteinte, et à dégager l'appui-tête (1) ainsi réalisé du support (11) de maintien.

3. Procédé de fabrication selon la revendication 2, caractérisé en ce que la vitesse de pénétration des éléments chauffants (2) est de l'ordre de 1 centimètre par seconde et la vitesse de rétraction desdits éléments (2) de l'ordre de 10 centimètres par seconde, les éléments chauffants (2) étant portés à une température d'environ 280 degrés Celsius pour la fusion à chaud.

4. Dispositif pour la fabrication d'un appui-tête (1) avec un insert articulé (5), obtenu par coulée in situ d'un mélange de mousse de polyuréthane (7) dans une enveloppe extérieure (6) contenant l'insert (5) comprenant des branches articulées, pour la mise en oeuvre du procédé de fabrication selon l'une quelconque des revendications 1 à 3, caractérisé en ce qu'il est principalement constitué par une structure (12) mobile suivant au moins une direction donnée, notamment parallèlement aux branches (4) de l'insert (5) de l'appui-tête (1) disposé sur un support de maintien (11) rapporté, et comportant deux bras articulés (13) munis chacun, à l'une de leurs extrémités, d'éléments chauffants (2) reliés à une source électrique.

5. Dispositif selon la revendication 4, caractérisé en ce que les éléments chauffants (2) se présentent avantageusement sous la forme de boucles rigides (14), réalisées par cintrages successifs d'éléments de fil chauffant (15) et comportant des parties (16) formées en V utilisées comme lames chauffantes.

6. Dispositif selon la revendication 5, caractérisé en ce que le fil chauffant (15) constituant les boucles (14) consiste en un fil d'acier de section circulaire et d'un diamètre de l'ordre de 2 millimètres, les lames chauffantes (16) en V présentant une section rectangulaire d'une épaisseur de 0,5 millimètre environ et d'une hauteur de 2 millimètres environ.

## Patentansprüche

1. Verfahren zur Herstellung einer Kopfstütze mit einem gelenkigen Einsatz, das zunächst darin besteht, in situ eine Polyurethanschaummischung in eine Außenhülle zu gießen, in der ein Einsatz, welcher gelenkige Arme umfaßt, angeordnet worden ist, ein Verfahren, **dadurch** **gekennzeichnet,** daß es darin besteht, mittels Heizelementen (2) die Schwenkräume (3) der gelenkigen Arme (4) des Einsatzes (5) durch Heißschmelzen der Außenhülle (6) und des Polyurethanschaumstoffes (7) an den entsprechenden Stellen (8) der Kopfstütze (1) auszuhöhlen und gleichzeitig die Außenhülle (6) und den Polyurethanschaumstoff (7) auf der Höhe dieser Schwenkräume (3) zu kauterisieren.

2. Herstellungsverfahren nach Anspruch 1, dadurch gekennzeichnet, daß die Erzeugung der Schwenkräume (3) zunächst darin besteht, die Kopfstütze (1) so auf einer Halterung (11) anzuordnen, daß die auszuhöhlenden Stellen (8) sichtbar sind, dann die Heizelemente (2) auf eine Temperatur zu bringen, welche die Durchführung eines Heißschmelzvorgangs ermöglicht, die genannten Heizelemente (2) auf der Höhe dieser auszuhöhlenden Stellen (8) in die Kopfstütze (1) eindringen zu lassen, und zwar bis zu einer Tiefe, die von dem eingesetzten gelenkigen Einsatz (5) abhängt, und schließlich die Heizelemente (2) wieder herauszuziehen, sobald die vorbestimmte Tiefe erreicht ist, und die so hergestellte Kopfstütze (1) von der Halterung (11) zu lösen.

3. Herstellungsverfahren nach Anspruch 2, dadurch gekennzeichnet, daß die Eindringgeschwindigkeit der Heizelemente (2) in der Größenordnung von 1 Zentimeter pro Sekunde und die Geschwindigkeit des Herausziehens dieser Elemente (2) in der Größenordnung von 10 Zentimetern pro Sekunde liegt, wobei die Heizelemente (2) für das Heißschmelzen auf eine Temperatur von etwa 280 Grad Celsius gebracht werden.

4. Vorrichtung für die Herstellung einer Kopfstütze (1) mit einem gelenkigen Einsatz (5), erhalten durch das In-situ-Gießen einer Polyurethanschaummischung (7) in eine Außenhülle (6), welche den Einsatz (5) enthält, der gelenkige Arme umfaßt, für die Durchführung des Herstellungsverfahrens nach irgendeinem der Ansprüche 1 bis 3, dadurch gekennzeichnet, daß sie hauptsächlich von einer Struktur (12) gebildet wird, die entlang mindestens einer vorgegebenen Richtung beweglich ist, insbesondere parallel zu den Armen (4) des Einsatzes (5) der Kopfstütze (1), die auf einer angesetzten Halterung (11) angeordnet ist, und zwei gelenkige Arme (13) umfaßt, die jeweils an einem ihrer Enden mit Heizelementen (2) versehen sind, welche mit einer elektrischen Quelle verbunden sind.

5. Vorrichtung nach Anspruch 4, dadurch gekennzeichnet, daß die Heizelemente (2) vorteilhafterweise die Form steifer Bügel (14) aufweisen, die durch eine wiederholte Biegung von Heizdrahtelementen (15) hergestellt wurden und V-förmige Teile (16) umfassen, die als Heizlamellen dienen.

6. Vorrichtung nach Anspruch 5, dadurch gekennzeichnet, daß der die Bügel (14) bildende Heizdraht (15) aus einem Stahldraht von kreisrundem Querschnitt und mit einem Durchmesser in der Größenordnung von 2 Millimetern besteht, wobei die V-förmigen Heizlamellen (16) einen rechteckigen Querschnitt mit einer Dicke von etwa 0,5 Millimetern und einer Höhe von etwa 2 Millimetern aufweisen.

## Claims

1. Method of producing a headrest with an articulated insert, involving previously pouring a mixture of polyurethane foam in situ into an external casing in which an insert comprising articulated branches has been arranged, the method being characterised in that it involves digging, by means of heating elements (2), clearance spaces (3) for the articulated branches (4) of the insert (5) by hot fusion of the external casing (6) and of the polyurethane foam (7) at the corresponding locations (8) of the headrest (1) and simultaneously cauterizing the external casing (6) and the polyurethane foam (7) in the region of said clearance spaces (3).

2. Method of production according to Claim 1, characterised in that the arrangement of the clearance spaces (3) firstly involves disposing the headrest (1) on a holding support (11) so that the locations (8) to be dug are apparent, then bringing the heating elements (2) to a temperature allowing the implementation of hot fusion, causing said heating elements (2) to penetrate the headrest (1) in the region of said locations (8) to be dug to a depth which is dependent on the implanted articulated insert (5) and finally removing the heating elements (2) as soon as the predetermined depth is reached and releasing the headrest (1) thus produced from the holding support (11).

3. Method of production according to Claim 2, characterised in that the speed of penetration of the heating elements (2) is of the order of 1 centimetre per second and the speed of retraction of said elements (2) of the order of 10 centimetres per second, the heating elements (2) being brought to a temperature of about 280° Celsius for hot fusion.

4. Apparatus for producing a headrest (1) with an articulated insert (5) obtained by the in situ pouring of a mixture of polyurethane foam (7) into an external casing (6) containing the insert (5) comprising articulated branches for carrying out the method of production according to any one of Claims 1 to 3, characterised in that it mainly consists of a structure (12) which is movable in at least one given direction, in particular in parallel with the branches (4) of the insert (5) of the headrest (1) disposed on an added holding support (11) and including two articulated arms (13) each equipped at one of their ends with heating elements (2) connected to a source of electricity.

5. Apparatus according to Claim 4, characterised in that the heating elements (2) are advantageously in the form of rigid loops (14) produced by successive bending of heating filament elements (15) and including V-shaped portions (16) used as heating blades.

6. Apparatus according to Claim 5, characterised in that the heating filament (15) constituting the loops (14) consists of a steel filament of circular section having a diameter of about 2 millimetres, the V-shaped heating blades (16) having a rectangular section with a thickness of about 0.5 millimetre and a height of about 2 millimetres.
